Europäisches Patentamt

**European Patent Office**

Office européen des brevets

(11) Publication number: **0 095 236**
**B1**

(12) # EUROPEAN PATENT SPECIFICATION

(45) Date of publication of patent specification: **18.01.89**

(21) Application number: **83301873.2**

(22) Date of filing: **31.03.83**

(51) Int. Cl.⁴: **B 60 R 13/04**

(54) **Trim strip for automobile bodies and process for making the same.**

(30) Priority: **21.05.82 US 380783**
**28.02.83 US 468721**

(43) Date of publication of application:
**30.11.83 Bulletin 83/48**

(45) Publication of the grant of the patent:
**18.01.89 Bulletin 89/03**

(84) Designated Contracting States:
**DE FR GB IT**

(56) References cited:
**FR-A-1 417 244**
**FR-A-2 104 142**
**GB-A-2 067 473**
**US-A-3 881 042**
**US-A-3 994 561**
**US-A-4 351 864**

(73) Proprietor: **THE D.L.AULD COMPANY**
**1209 North Fifth Street P.O. Box 8459**
**Columbus Ohio 43201 (US)**

(72) Inventor: **Waugh, Robert E.**
**3287 Somerford Road**
**Columbus Ohio (US)**

(74) Representative: **Warren, Anthony Robert et al**
**BARON & WARREN 18 South End Kensington**
**London W8 5BU (GB)**

Courier Press, Leamington Spa, England.

EP 0 095 236 B1

## Description

The present invention relates to a process for making an elongate strip or moulding of the type attached to an automobile body side or other motor vehicle for protection or decoration.

Trim strips of various configurations have been used in the automotive industry to decorate and protect the surfaces of an automobile, especially the body side surfaces. In recent years emphasis has been placed on replacing chromed metallic moulding strips with improved plastic trim strips which do not corrode and can be adhesively attached to the automobile body without fasteners. There are a number of examples of such trim strips in the patent literature.

US—A—4,206,155 discloses a decorative body side moulding in which a decorative strip is laminated to an extruded strip of a pliable material and the two strips are overcoated with a weather resistant coating of acrylic monomer.

US—A—4,220,681 teaches a trim in which a thin metal layer is laminated to a plastic substrate and coated with a soft PVC resin provided with a matt surface.

US—A—4,010,297 discloses a composite trim strip made up of two adhesively bonded non-coextensive longitudinal body portions, one body portion being wider than and adapted to receive the other body portion. The body portions are assembled and attached to the side of an automobile using elastomeric adhesives which serve to distribute impact.

US—A—3,914,482 illustrates a moulding wherein a reflective layer is deposited on a rigid synthetic resin base which is coated with a clear synthetic resin layer and overcoated with a protective layer of synthetic resin of uniform thickness.

US—A—3,881,042 discloses a decorative trim strip having a channeled body portion of synthetic resin in to which a decorative cover strip, comprising a strip or film of transparent plastic which carries a layer or coating of decorative material on the side thereof facing the body portion, is placed. The decorative material may be a metallised aluminium surface visible through the transparent plastics cover strip.

US—A—3,843,425 relates to a decorative trim having a longitudinal passage therethrough which is filled or coated with a decorative material such as a paint. The trim is formed with a shallow channel on its underlying surface which carries adhesives.

US—A—3,994,561 also discloses a decorative moulding for vehicles. The moulding is preformed and includes a transparent or translucent convex-shaped covering portion consisting of a magnifying lens. The pre-formed moulding also includes a base portion formed with the cover portion by a hinge so that a cavity, within which a decorative or reflective sheet is placed, is formed between the two portions by folding over the base portion.

It is however an object of the present invention to provide an improved process for making a flexible trip strip incorporating a clear plastics cap which achieves a lens effect enhancing the appearance of the underlying surface of the trim.

Accordingly, the present invention consists of a process for forming a flexible trim suitable for application to an automobile body, said trim strip being formed from a flexible elongate base member having an upper surface and a lower surface, comprising the steps of:

forming said elongate base member with sharply defined peripheral edges but no upstanding side walls,

casting a fluent plastics composition onto said elongate base member while said elongate base member is retained in a substantially flat condition free from surrounding side walls, such that said plastics composition flows to the sharply defined peripheral edges of said elongate base member and forms a positive meniscus, and

curing said plastics composition to form a flexible, weather-resistant clear plastics cap to provide a lens effect to said elongate base member and thereby optically enhancing the appearance of said upper surface of said elongate base member as viewed through said clear plastics cap.

The lower side of the base member may be coated with an adhesive for attaching the strip to the vehicle body.

A preferred plastic is a polyurethane having high impact resistance and more preferably a flexible polyurethane which cures to a Shore D hardness of about 45 to 65.

The trim strip may be readily manufactured by the process in accordance with the present invention, on a continuous basis, and enhanced decorative effects can be provided, which may be varied without altering the basic manufacture of the trim. For example, by changing decoration of the upper surface the trim may be modified to complement the colour or style of a number of vehicles without otherwise affecting the manufacturing operations.

In order that the invention may be more readily understood, reference will now be made to the accompanying drawings, in which:—

Figure 1 is a lateral cross-sectional view of a trim strip produced by one embodiment of the process, in accordance with the invention, and

Figure 2 is a lateral cross-sectional view of a trim strip produced by another embodiment of the invention.

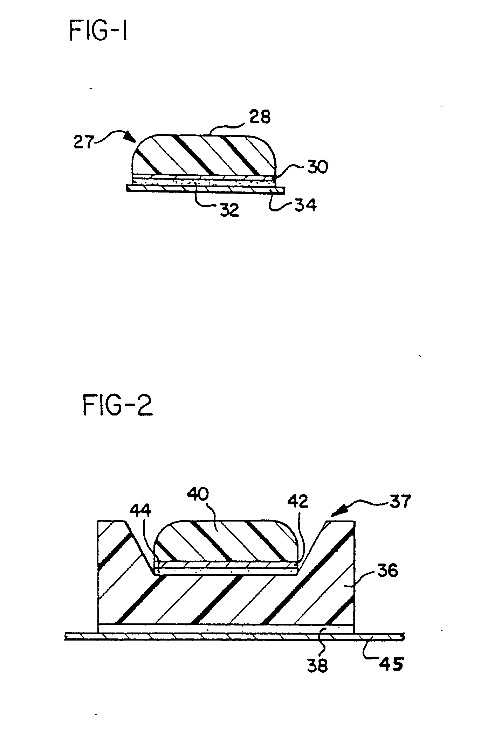

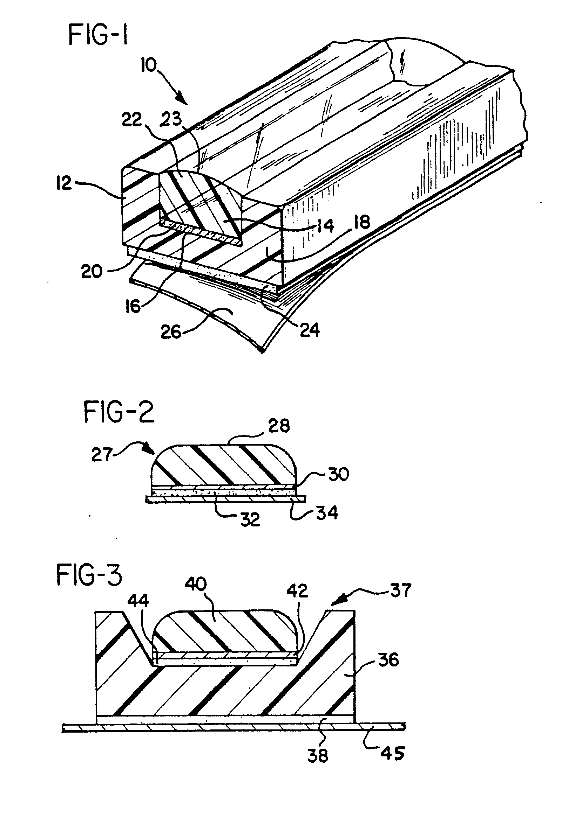

Figure 1 illustrates a trim strip produced by one embodiment of the invention. The trim strip 287 consists essentially of a decorated and usually embossed foil member 30 which carries on the decorated or graphic surface thereof a clear, plastic overlay 28 having radiused edges. The trim strip in accordance with this embodiment is usually equipped with a layer of adhesive 32 (generally pressure-sensitive) which is accessed by removing a release liner 34. Trim strip as shown in Figure 1 can be manufactured by preprinting and embossing an adhesive backed foil member provided with a release liner which is kiss-cut in registry with the printed design. By removing the selvage from around the trim and casting a fluid plastic such as polyurethane on the trim strip, an overlay having radiused edges which provides a lens effect is obtained as the plastic flows to the cut edge of the foil member, stops and forms a positive meniscus. Thereafter, the overlap is cured. It is particularly advantageous to form the overlay 28 in Figure 1 of a soft, flexible polyurethane as the trim can be rolled up and supplied directly to the automobile owner as part of a customizing kit. With the flexible overlay, the trim strip confirms to the curvature of the automobile body.

The trim strip shown in Figure 2 comprises an extrudable elongate moulding 36, a printed and usually embossed foil member 42, and an overlay 40 having radiused edges. The inlay (comprising the overlay 40 and the foil member 42) is secured within moulding 36 by an adhesive layer 44. The trim strip 37 is secured to the vehicle body by adhesive layer 38 which is protected with liner 45 which is removed at the time of installation. The trim strip 37 can be formed by preparing a pre-cast trim strip as in Figure 1 and laying this strip (minus release liner 34) into the channel in moulding 36 where it is adhered with the adhesive 44. It will be evident from this emnbodiment of the invention that it is not necessary for the plastic overlay-forming material to be cast into place and contact the side walls of the channel in the body moulding.

The term "foil member" as used herein includes metal foils, plastic foils (e.g. Mylar), metallized plastic foils and paper-backed foils. The foil member may take various forms, for example, it may be a strip of metal foil which may be embossed to provide a visual effect. Otherwise, the foil member may be a plastic foil strip which is printed or silk-screened with a decorative design, painted or tinted.

For use as automobile side body trim, the cast plastic is preferably a thermosetting material which is weather-resistant and does not yellow or cloud as a result of prolonged exposure to sunlight and which withstands strong detergents. The cast plastic should also be resistant to abrasion and impact. A number of plastics can be used for this purpose, but one which is particularly advantageous because it satisfies all the above needs is an impact-resistant polyurethane. One polyurethane useful in the present invention is the reaction product of polypropylene glycol and an aliphatic diisocyanate. Other plastics, such as acrylics and epoxies may also be used. In one embodiment, a relatively soft, flexible, weather-resistant polyurethane generally characterised by a Shore D hardness in the range of 45 to 65 and preferably 45 to 55 is used. Such materials are known and various ones can be used in the invention. One that is particularly useful is the reaction product of (A) a mixture of a polyester glycol and low to medium molecular weight polypropylenetriols and (B) an aliphatic diisocyanate-polypropylenetriol adduct.

## Claims

1. A process for forming a flexible trim strip suitable for application to an automobile body, said trim strip being formed from a flexible elongate base member (30, 42) having an upper surface and a lower surfacle, comprising the steps of:—

forming said elongate base member (30, 42) with sharply defined peripheral edges but no upstanding side walls,

casting a fluent plastics composition onto said elongate base member (30, 42) while said elongate base member is retained in a substantially flat condition free from surrounding side walls, such that said plastics composition flows to the sharply defined peripheral edges of said elongate base member and forms a positive meniscus, and

curing said plastics composition to form a flexible, weather-resistant clear plastics cap (28, 40) to provide a lens effect to said elongate base member (30, 42) and thereby optically enhancing the appearance of said upper surface of said elongate base member as viewed through said clear plastics cap.

2. The process as claimed in claim 1, wherein said elongate base member (30, 42) is a foil member selected from the group consisting of metal foil, plastic foil, or metallised plastics foil.

3. The process as claimed in claim 1 or 2, wherein said plastics cap (28, 40) is formed of a flexible, abrasion-resistant polyurethane.

4. The process as claimed in claim 1, 2 or 3, wherein said lower surface of said elongate base member (30) is provided with a layer of adhesive (32) and an overlying release film layer (34).

5. The process as claimed in any one of claims 1 to 4, including the step of rolling said flexible trim strip up into a roll.

6. The process as claimed in any one of claims 1 to 5, wherein said clear plastics cap has a Shore D hardness of about 45 to 65.

7. The process as claimed in any preceding claim, further comprising the steps of:—

forming an elongate flexible moulding (36) having an elongate channel in one surface thereof,

placing said elongate base member (42) having said plastics cap (4) thereon, into said channel, and

securing said elongate base member (42) in said channel via the lower surface thereof.

## Patentansprüche

1. Verfahren zur Herstellung einer flexiblen Profilleiste, die zur Aufbringung auf einer Automobilkarosserie geeignet ist, wobei diese Profilleiste aus einem flexiblen lägnglichen Basisteil (30, 42) mit einer oberen Fläche und einer unteren Fläche hergestellt wird, mit den Stufen, bei denen man

dieses längliche Basisteil (30, 42) mit scharf abgegrenzten Umfangskanten, aber ohne aufrechtstehende Seitenwände herstellt,

eine fließende Kunststoffmasse auf das längliche Basisteil (30, 42) gießt, während dieses längliche Basisteil in einem im wesentlichen flachen Zustand frei von umgebenden Seitenwänden gehalten wird, so daß die Kunststoffmasse zu den scharf abgegrenzten Umfangskanten des länglichen Basisteils fließt und einen positiven Meniskus bildet, und

die Kunststoffmasse unter Bildung einer flexiblen, wetterbeständigen klaren Kunststoffhaube (28, 40) härtet, um einen Linseneffekt an dem länglichen Basisteil (30, 42) zum bekommen und so das Aussehen der oberen Fläche dieses länglichen Basisteils durch die klare Kunststoffkappe betrachtet zu verbessern.

2. Verfahren nach Anspruch 1, bei dem das längliche Basisteil (30, 42) ein Folienteil aus der Gruppe, die aus einer Metallfolie, Kunststoffolie oder metallisierten Kunststoffolie besteht, ist.

3. Verfahren nach Anspruch 1 oder 2, bei dem die Kunststoffhaube (28, 40) aus einem flexiblen, abriebbeständigen Polyurethan hergestellt wird.

4. Verfahren nach Anspruch 1, 2 oder 3, bei dem die untere Fläche des länglichen Basisteils (30) mit einer Klebstoffschicht (32) und einer darüberliegenden Trennfilmschicht (34) versehen wird.

5. Verfahren nach einem der Ansprüche 1 bis 4 mit der Stufe eines Aufrollens der flexiblen Profilleiste zu einer Rolle.

6. Verfahren nach einem der Ansprüche 1 bis 5, bei dem die klare Kunststoffhaube eine Shore-D-Härte von etwa 45 bis 65 hat.

7. Verfahren nach einem der vorausgehenden Ansprüche mit den zusätzlichen Stufen, bei denen man

ein längliches flexibles Formteil (36) mit einem länglichen Kanal in einer seiner Oberflächen herstellt,

das längliche Basisteil (42) mit der Kunststoffhaube (4) darauf in diesen Kanal einsetzt und

das längliche Basisteil (42) in dem Kanal über seine untere Fläche befestigt.

## Revendications

1. Procédé pour former une moulure de protection et de décoration flexible applicable sur une carrosserie d'automobile, ladite moulure étant formée à partir d'un élément de base allongé flexible (30, 42) ayant une surface supérieure et une surface inferieure, comprenant les étapes de:

— former le dit élément de base allongé (30, 42) avec des arêtes périphériques vives mais sans parois de côté dressées,

— couler une composition en plastique fluide sur ledit élément de base allongé (30, 42) tandis que ledit élément de base allongé est maintenu dans une position sensiblement à plat, dégagé des parois de côté environnantes, de façon telle que ladite composition en plastique s'écoule jusqu'aux arêtes péripheriques vives dudit élément de base allongé et forme un ménisque positif,

— traiter ladite composition en plastique pour former une garniture en plastique transparente et résistante à l'eau (28, 40) pour conférer un effet de lentille audit élément de base allongé (30, 42) et de cette façon souligner optiquement l'apparence de ladite surface supérieure dudit élément de base allongé lorsqu'on le voit à travers ladite garniture plastique transparente.

2. Procédé selon la revendication 1, caractérisé en ce que ledit élément de base allongé (30, 42) est un élément en feuille choisi dans le groupe constitué par les feuilles de métal, les feuilles de plastique ou les feuilles de plastique métallisé.

3. Procédé selon la revendication 1 ou la revendication 2, caractérisé en ce que ladite garniture de plastique (28, 40) est formée à partir de polyuréthane résistant à l'abrasion et flexible.

4. Procédé selon la revendications 1, 2 ou 3, caractérisé en ce que ladite surface inférieure dudit élément de base allongé (30) est munie d'une couche d'adhésif (32) et d'une couche de film détachable superposée (34).

5. Procédé selon l'une quelconque des revendications de 1 à 4 comprenant en outre l'étape de rouler ladite moulure en un rouleau.

6. Procédé selon l'une quelconque des revendications de 1 à 5 caractérisé en ce que ladite garniture de plastique transparente a une dureté Shore D d'environ 45 à 65.

7. Procédé selon l'une quelconque des revendications précédentes comprenant en outre les étapes de:

— former un moule flexible allongé (36) ayant un canal allongé sur une de ses surfaces,

— placer ledit élément de base allongé (42) ayant ladite garniture de plastique (4) dessus, dans ledit canal, et

— fixer ledit élément de base allongé (42) dans ledit canal par l'intermédiaire de sa surface inférieure.

FIG-1

FIG-2

FIG-1

10

22 23

12

14 18

20

16

26

24

FIG-2

28

27

30

32 34

FIG-3

44 40 42 37

36

38 45